# EUROPÄISCHE PATENTSCHRIFT

(11) **EP 4 214 102 B1**
(45) Veröffentlichungstag und Bekanntmachung des Hinweises auf die Patenterteilung: **25.11.2026**
(21) Anmeldenummer: 21797953.3
(22) Anmeldetag: 13.10.2021
(51) Int. Cl.: B61D 27/00, B60H 1/32, F25D 21/14

(54) **KLIMAANLAGE FÜR EIN FAHRZEUG**
AIR-CONDITIONING SYSTEM FOR A VEHICLE
SYSTÈME DE CLIMATISATION POUR UN VÉHICULE

(30) Priorität: 03.11.2020 DE 102020213783
(43) Veröffentlichungstag der Anmeldung: 26.07.2023
(73) Patentinhaber: Siemens Mobility GmbH, 80997 München (DE)
(72) Erfinder: KLEFF, Norbert, 45147 Essen (DE); VREYDAL, Daniel, 52477 Alsdorf (DE)
(74) Vertreter: Siemens Patent Attorneys
(86) Internationale Anmeldenummer: PCT/EP2021/078312
(87) Internationale Veröffentlichungsnummer: WO 2022/096238

(56) Entgegenhaltungen:
- CN-A- 110 217 251
- CN-A- 110 671 807
- CN-A- 110 843 833
- CN-U- 205 854 156
- CN-U- 208 291 226
- DE-A1- 102011 121 345
- US-B1- 6 442 956
- US-B1- 6 584 795

## Beschreibung

Die Erfindung bezieht sich auf eine Klimaanlage für ein Fahrzeug, mit einem Luftbehandlerteil, der einen Verdampfer, an dem ein zu konditionierender Luftstrom mittels eines Zulüfters vorbeigeführt wird, und einer Kondensatsammelwanne, in der an dem Verdampfer anfallendes Kondensat gesammelt wird, wobei die Kondensatsammelwanne zum Abführen von gesammeltem Kondensat mit einer Austrittsöffnung zu ihrer Umgebung in Verbindung steht, sowie auf ein mit einem solchen Klimagerät ausgestattetes Fahrzeug.

Beim Betrieb einer solchen Klimaanlage im Kühlmodus fällt im Bereich unterhalb des Verdampfers (innerer Wärmetauscher) eine erhebliche Menge an kondensiertem Wasser aus. Dieses wird typischer Weise in einer Kondensatsammelwanne gesammelt und sodann aus der Klimaanlage kontrolliert abgeführt. Im Falle eines druckertüchtigten Fahrzeugs, beispielsweise eines Hochgeschwindigkeitszuges, darf die vorgesehene Austrittsöffnung der Kondensatsammelwanne oder aber eine eingesetzte Entwässerungsleitung, an deren Ende die Austrittsöffnung angeordnet ist, nicht offen zur Umgebung der Kondensatsammelwanne ausgeführt werden, da ansonsten ein Druckstoß über die Austrittsöffnung in das Fahrzeug eindringen könnte. Hier ist es ratsam eine Wassersäule einer geeigneten Höhe zu gewährleisten, damit das Eindringen des Druckstoßes zuverlässig verhindert werden kann. Um eine solche Wassersäule sicherzustellen, bietet sich der Einsatz eines zu steuernden Ventils an. Eine Klimaanlage für ein Fahrzeug mit einem Luftbehandlerteil und einer Kondensatsammelwanne ist aus CN 110 843 833 A bekannt.

Bei einer solchen Klimaanordnung besteht die Möglichkeit, dass sich die Druckverhältnisse im Bereich der Kondensatsammelwanne derart einstellen, dass oberhalb des Kondensatwasserspiegels ein erheblicher Unterdruck herrscht. Dies wiederum erschwert oder verhindert sogar das kontrollierte Abführen des Kondensats nach außen. Ein solcher Unterdruck bildet sich insbesondere dann, wenn der zur Förderung des Luftstroms eingesetzte Zulüfter stromabwärts des Verdampfers angeordnet ist ("saugende Lüfteranordnung").

Im Ergebnis kann es zu einem Ansteigen des Kondensatwasserspiegels im Klimagerät bei fortlaufendem Kühlbetrieb kommen, wobei unter Umständen sogar definierte Trockenbereiche innerhalb der Klimaanlage und auch ggf. eines angeschlossenen Kanalsystems geflutet werden können.

Ausgehend hiervon liegt der Erfindung die Aufgabe zugrunde, bei einer Klimaanlage der eingangs genannten Art eine kontrollierte Abführung von gesammeltem Kondensatwasser auch unter schwierigen Druckverhältnissen in der Klimaanlage zu ermöglichen.

Diese Aufgabe wird gelöst durch eine Klimaanlage mit den Merkmalen des Anspruchs 1.

Danach zeichnet sich die eingangs beschriebene Klimaanlage dadurch aus, dass ein Austritt von in der Kondensatsammelwanne gesammeltem Kondensat durch die Austrittsöffnung mittels einer Drucklufteinrichtung unterstützt ist, die derart angeordnet ist, dass sie auf das gesammelte Kondensat in Richtung der Umgebung der Kondensatsammelwanne einwirkt.

Die vorgesehene Drucklufteinrichtung unterstützt somit das Austreten von gesammelten Kondensatwasser aus der Kondensatsammelwanne. Die Drucklufteinrichtung ist dazu in der Lage, durch geeignete Druckstöße die Druckverhältnisse im Bereich der Austrittsöffnung/der Entwässerungsleitung derart abzuändern, dass in der Kondensatsammelwanne gesammeltes Kondensatwasser ungehindert durch die Austrittsöffnung nach außerhalb der Klimaanlage gelangen kann.

Die Drucklufteinrichtung wird bevorzugt von einer Ejektordüse gebildet. Diese ist wiederum bevorzugt innerhalb des Luftbehandlerteils der Klimaanlage angeordnet und beispielsweise von oben auf eine bodenseitige Austrittsöffnung gerichtet.

Bei Einsatz einer Entwässerungsleitung, an deren von der Kondensatsammelwanne entferntem Ende dann die Austrittsöffnung zur Umgebung liegt, kann die Ejektordüse auch innerhalb dieser Entwässerungsleitung angeordnet sein.

Vorteilhafterweise wird ein Ausströmen von Druckluft aus der Ejektordüse mittels eines Magnetventils in einer Druckluftzuleitung für die Elektrodüse gesteuert. Dieses Magnetventil kann bevorzugt zeitgesteuert oder aufgrund eines in der Kondensatsammelwanne angeordneten Füllstandsschalters betätigt sein. Eine Zeitsteuerung des Öffnens des Magnetventils würde dann auf Erfahrungswerten beruhen, in welchen Zeitintervallen eine Unterstützung des Abflusses des Kondensatwassers erforderlich ist. Demgegenüber signalisiert der Füllstandsschalter das Erreichen eines bestimmten Kondensatwasserpegels in der Kondensatsammelwanne, so dass das Magnetventil bei Erreichen eines vorgegebenen Füllstandspegels geöffnet wird, so dass mittels der Ejektordüse ein Druckstoß erfolgt.

Die Austrittsöffnung zur Abführung von gesammelten Kondensatwasser kann unmittelbar in einem Bodenbereich der Kondensatsammelwanne vorgesehen und derart ausgebildet sein, dass über der Austrittsöffnung zur Druckdichtigkeit der Klimaanlage eine Wassersäule aufrechterhaltbar ist. Diese Ausführungsform bezieht sich insbesondere auf druckertüchtigte Fahrzeuge wie Hochgeschwindigkeitszüge. Gerade für solche Anwendungen der Erfindung ergeben sich wesentliche Vorteile, was die Abfuhr von Kondensatwasser anbetrifft.

Alternativ kann die Austrittsöffnung auch am Ende einer Entwässerungsleitung vorgesehen sein, die an die Kondensatsammelwanne angeschlossen ist und in der zur Druckdichtigkeit der Klimaanlage eine Wassersäule aufrechterhaltbar ist.

Die Erfindung ist besonders vorteilhaft, wenn der Zulüfter, bezogen auf eine Strömungsrichtung des Luftstroms, stromabwärts des Verdampfers angeordnet ist. Dann nämlich bildet sich oberhalb des Füllstandspegels des Kondensatwassers ein erheblicher Unterdruck aus, der einem Abführen des Kondensatwassers durch die Austrittsöffnung entgegen wirkt.

Die oben angegebene Aufgabe wird hinsichtlich des Fahrzeugs gelöst durch ein Fahrzeug mit den Merkmalen des Anspruchs 8. Insbesondere ein Schienenfahrzeug ist standardmäßig mit einem Druckluftreservoir ausgestattet (z. B. zur pneumatischen Betätigung von Fahrzeugtüren). An dieses Druckluftreservoir ist bevorzugt die Drucklufteinrichtung der Klimaanlage angeschlossen. Zum Einstellen eines für den Betrieb der Drucklufteinrichtung, insbesondere der Ejektordüse, geeigneten Drucks kann eine Drossel vorgesehen sein, deren Einsatz beispielsweise einen Betriebsdruck von 3 bar für die Ejektordüse gewährleistet. Dabei beträgt ein typischer Luftdruck in einer Hauptluftleitung eines Schienenfahrzeugs zwischen 6 und 10 bar.

Ein Ausführungsbeispiel der Erfindung wird nachfolgend unter Bezugnahme auf die Zeichnungen noch näher erläutert. Es zeigen:
- Figur 1: eine schematische Ansicht eines Luftbehandlerteils einer Klimaanlage und
- Figur 2: eine schematische Ansicht eines Details des Luftbehandlerteils von Figur 1.

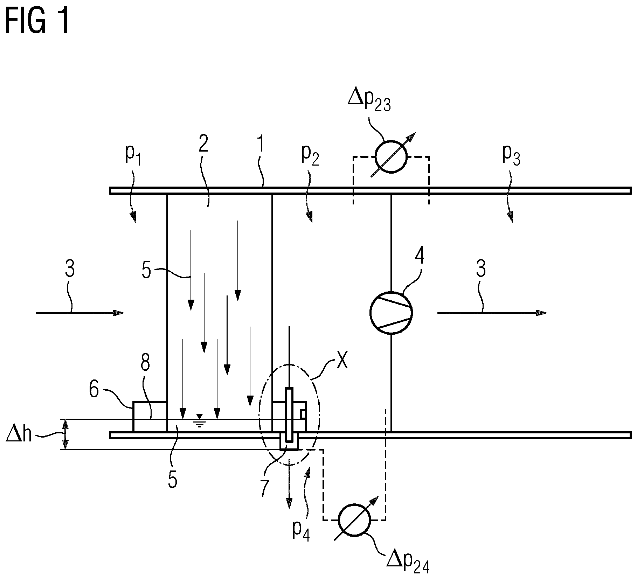

Wie Figur 1 zu entnehmen ist, ist innerhalb eines Gehäuses 1 eines Luftbehandlerteils einer Klimaanlage ein Verdampfer 2 angeordnet. Ein beispielsweise hinsichtlich seiner Temperatur zu konditionierender Luftstrom 3 wird an dem Verdampfer 2 vorbeigefördert, und zwar mit Hilfe eines Zulüfters 4. Der Zulüfter 4 ist, bezogen auf die Strömungsrichtung des Luftstroms 3, stromabwärts des Verdampfers 2 angeordnet. In dieser Weise wird eine sog. "saugende Anordnung" des Zulüfters 4 relativ zu dem Verdampfer 2 verwirklicht.

Eine Wechselwirkung des Feuchtigkeit enthaltenden Luftstroms 3 mit dem Verdampfer 2 bewirkt den Ausfall von Kondensat 5 am Verdampfer 2. Zum Sammeln des Kondensats 5 ist eine Kondensatsammelwanne 6 vorgesehen, die unterhalb des Verdampfers 2 angeordnet ist, so dass das Kondensat 5 unter Einwirkung der Schwerkraft in die Kondensatsammelwanne 6 gelangt.

Im vorliegende Ausführungsbeispiel ist die Anwendung für den Fall eines druckdichten Hochgeschwindigkeitszugs gezeigt, bei dem insbesondere Druckstöße von außen in die Klimaanlage hinein zu vermeiden sind. Aus diesem Grund wird die Kondensatsammelwanne 6 nicht unmittelbar entleert. Vielmehr sind die Ablaufeigenschaften der Kondensatsammelwanne 6 derart gewählt, dass oberhalb einer Austrittsöffnung 7, die an einer Bodenseite der Kondensatsammelwanne 6 vorgesehen ist, eine Wassersäule verbleibt. Die vertikale Ausdehnung der Wassersäule bestimmt sich nach der Höhendifferenz Δh zwischen dem Füllstandspegel 8 für das Kondensat 5 in der Kondensatsammelwanne 6 und der Höhe der Austrittsöffnung 7.

Die Druckverhältnisse im Luftbehandlerteil der Klimaanlage stellen sich wie folgt dar: Vor Erreichen des Verdampfers 2 weist der Luftstrom 3 einen Druck p₁ auf. Der auf der Saugseite des Verdampfers 2 angeordnete Zulüfter 4 bewirkt einen Druck p₂, der zum Verbeiführen des Luftstroms 3 am Verdampfer 2 niedriger ist als der Druck P₁. Nach Passieren des Zulüfters 4 besitzt der Luftstrom 3 einen Druck p₃. Zu berücksichtigen ist zudem, dass das in der Kondensatsammelwanne 6 gesammelte Kondensat 5 einen hydrostatischen Druck besitzt, der durch die Höhe der Wassersäule Δh bestimmt ist. Soll das Kondensat 5 aus der Kondensatsammelwanne 6 über die Austrittsöffnung 7 abgeführt werden, muss der hydrostatische Druck des Kondensats 5 in der Kondensatsammelwanne 6 größer sein als eine Druckdifferenz Δp₂₄ zwischen dem Druck p₂ und einem Außendruck p₄, der in der Umgebung des Luftbehandlerteils/der Kondensatsammelwanne 6 herrscht. Insbesondere kann kein Ablauf von Kondensat 5 aus der Austrittsöffnung 7 erfolgen, wenn: $ρ \times g \times Δ h < Δ {p}_{24} .$

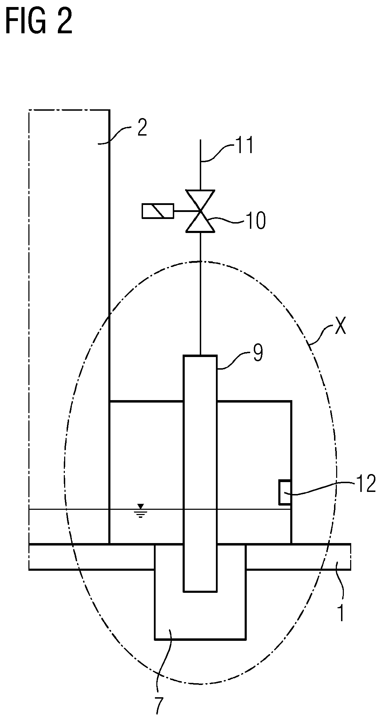

Um trotz solcher Druckverhältnisse in der Klimaanlage eine Entwässerung der Kondensatsammelwanne 6 zu ermöglichen, ist eine Drucklufteinrichtung vorgesehen, und zwar im Bereich des Details X (Bereich der Wassersäule) von Figur 1, das nunmehr anhand von Figur 2 näher erläutert wird.

Wie Fig. 2 zeigt, ist als Ausführungsbeispiel für eine Drucklufteinrichtung unmittelbar neben dem Verdampfer 2 auf dessen Saugseite eine vertikal angeordnete Ejektordüse 9 angeordnet, die von oben in die Wassersäule aus Kondensat 5 oberhalb der Austrittsöffnung 7 hineinragt und Druckluftstöße in Richtung auf die Austrittsöffnung 7 ausgeben kann.

Die Ejektordüse 9 ist über ein steuerbares Magnetventil 10 und eine Druckluft-Zuleitung 11 mit einem nicht dargestellten Druckluftreservoir verbunden. Ein solches Druckluftreservoir ist beispielsweise auf Schienenfahrzeugen standardmäßig vorhanden, so dass die Ejektordüse auf ein solches, bereits vorgesehenes Druckluftreservoir zurückgreifen kann, was ihre Versorgung mit Druckluft angeht. Zur Bereitstellung eines geeigneten Betriebsdrucks für die Ejektordüse 9 kann eine nicht dargestellte Drossel vorgesehen sein, um beispielsweise ausgehend von einem Standard-Luftdruck von 6 bis 10 bar einen Betriebs-Luftdruck für die Ejektordüse 9 von 3 bar bereitzustellen. Inwieweit der Einsatz einer Drossel erforderlich ist, richtet sich danach, welcher Luftdruck auf dem betreffenden Fahrzeug in dessen Druckluftreservoir vorgehalten ist.

Das Magnetventil 10 kann beispielsweise zeitgesteuert oder mit Hilfe eines in der Kondensatsammelwanne 6 angeordneten Füllstandsschalters 12 betätigt sein. In den Figuren ist ein Ausführungsbeispiel gezeigt, bei dem ein Ansprechen des Füllstandsschalters 12 eine Betätigung des Magnetventils 10 auslöst, so dass über die Ejektordüse 9 Druckluft in Richtung auf die Austrittsöffnung 7 ausgestoßen wird. In dieser Weise liefert die druckluftbetriebene Ejektordüse 9 über einen Impulsaustausch eine treibende Kraft für den Ablauf des Kondensats 5 aus der Kondensatsammelwanne 6.

In einem nicht näher dargestellten Ausführungsbeispiel kann die Kondensatsammelwanne 6 mit einer entfernt gelegenen Austrittsöffnung verbunden sein, und zwar über eine Entwässerungsleitung. In diesem Fall ist es möglich, dass die Ejektordüse 9 an geeigneter Stelle innerhalb dieser Entwässerungsleitung angeordnet ist. Das Prinzip der Unterstützung der Entwässerung der Kondensatsammelwanne 6 bleibt dabei gegenüber dem vorstehend beschriebenen Ausführungsbeispiel ungeändert.

## Patentansprüche

1. Klimaanalage für ein Fahrzeug, mit einem Luftbehandlerteil, der einen Verdampfer (2), an dem ein zu konditionierender Luftstrom (3) mittels eines Zulüfters (4) vorbeigeführt wird, und einer Kondensatsammelwanne (6), in der an dem Verdampfer (2) anfallendes Kondensat (5) gesammelt wird, wobei die Kondensatsammelwanne (6) zum Abführen von gesammeltem Kondensat (5) mit einer Austrittsöffnung (7) zu ihrer Umgebung in Verbindung steht,
**dadurch gekennzeichnet, dass**
ein Austritt von in der Kondensatsammelwanne (6) gesammeltem Kondensat (5) durch die Austrittsöffnung (7) mittels einer Drucklufteinrichtung unterstützt ist, die derart angeordnet ist, dass sie auf das gesammelte Kondensat (5) in Richtung der Umgebung der Kondensatsammelwanne (6) einwirkt.

2. Klimaanlage nach Anspruch 1,
**dadurch gekennzeichnet, dass**
die Drucklufteinrichtung von einer Ejektordüse (9) gebildet ist.

3. Klimaanlage nach Anspruch 2,
**dadurch gekennzeichnet, dass**
ein Ausströmen von Druckluft aus der Ejektordüse (9) mittels eines Magnetventils (10) in einer Druckluftzuleitung (11) für die Ejektordüse (9) gesteuert ist.

4. Klimaanlage nach Anspruch 3,
**dadurch gekennzeichnet, dass**
das Magnetventil (10) zeitgesteuert oder aufgrund eines in der Kondensatsammelwanne (6) angeordneten Füllstandsschalters (12) betätigt ist.

5. Klimaanlage nach einem der Ansprüche 1 bis 4,
**dadurch gekennzeichnet, dass**
die Austrittsöffnung (7) unmittelbar in einem Bodenbereich der Kondensatsammelwanne (6) vorgesehen und derart ausgebildet ist, dass über der Austrittsöffnung (7) zur Druckdichtigkeit der Klimaanlage eine Wassersäule aufrechterhaltbar ist.

6. Klimaanlage nach einem der Ansprüche 1 bis 4,
**dadurch gekennzeichnet, dass**
die Austrittsöffnung (7) am Ende einer Entwässerungsleitung vorgesehen ist, die an die Kondensatsammelwanne (6) angeschlossen ist und in der zur Druckdichtigkeit der Klimaanlage eine Wassersäule aufrechterhaltbar ist.

7. Klimaanlage nach einem der Ansprüche 1 bis 6,
**dadurch gekennzeichnet, dass**
der Zulüfter (4), bezogen auf eine Strömungsrichtung des Luftstroms (3), stromabwärts des Verdampfers (2) angeordnet ist.

8. Fahrzeug, ausgestattet mit einer Klimaanlage nach einem der Ansprüche 1 bis 7.

9. Fahrzeug nach Anspruch 8,
bei dem ein Druckluftreservoir vorgesehen ist, an das die Drucklufteinrichtung der Klimaanlage angeschlossen ist.

10. Fahrzeug nach Anspruch 9,
bei dem die Drucklufteinrichtung der Klimaanlage über eine Drossel an das Druckluftreservoir angeschlossen ist.

## Claims

1. Air-conditioning system for a vehicle, with an air treatment part, which an evaporator (2), past which a flow of air (3) to be air-conditioned is guided by means of a fan (4), and a condensate collection tub (6), in which condensate accumulating on the evaporator (2) is collected, wherein the condensate collection tub (6) is connected to an outlet opening (7) to its surroundings for the purpose of discharging collected condensate (5),
**characterised in that**
an escape of condensate (5) collected in the condensate collection tub (6) through the outlet opening (7) is assisted by means of a compressed air facility, which is arranged such that it has an effect on the collected condensate (5) in the direction of the surroundings of the condensate collection tub (6).

2. Air-conditioning system according to claim 1,
**characterised in that**
the compressed air facility is formed by an ejector nozzle (9).

3. Air-conditioning system according to claim 2,
**characterised in that**
an outflow of compressed air out of the ejector nozzle (9) is controlled by means of a solenoid valve (10) in a compressed air supply line (11) for the ejector nozzle (9).

4. Air-conditioning system according to claim 3,
**characterised in that**
the solenoid valve (10) is activated in a time-controlled manner or based on a fill level switch (12) arranged in the condensate collection tub (6).

5. Air-conditioning system according to one of claims 1 to 4,
**characterised in that**
the outlet opening (7) is provided directly in a bottom area of the condensate collection tub (6) and is embodied such that a water column can be maintained above the outlet opening (7) for the purpose of pressure tightness of the air conditioning system.

6. Air-conditioning system according to one of claims 1 to 4,
**characterised in that**
the outlet opening (7) is provided at the end of a drainage line, which is connected to the condensate collection tub (6) and in which a water column can be maintained for the purpose of pressure tightness in the air conditioning system.

7. Air conditioning system according to one of claims 1 to 6,
**characterised in that**
with respect to a flow direction of the flow of air (3), the fan (4) is arranged downstream of the evaporator (2).

8. Vehicle, equipped with an air-conditioning system according to one of claims 1 to 7.

9. Vehicle according to claim 8,
in which a compressed air reservoir is provided, to which the compressed air facility of the air conditioning system is connected.

10. Vehicle according to claim 9,
in which the compressed air facility of the air conditioning system is connected to the compressed air reservoir by way of a throttle.

## Revendications

1. Installation de climatisation d'un véhicule, comprenant une partie de traitement de l'air, qui a un évaporateur (2) devant lequel passe, au moyen d'un ventilateur (4) d'afflux, un courant (3) d'air à conditionner, et une cuve (6) collectrice de condensat, dans laquelle du condensat (5) se produisant sur l'évaporateur (2) est collecté, dans laquelle la cuve (6) collectrice de condensat est, pour l'évacuation du condensat (5) collecté, en relation avec son environnement par une ouverture (7) de sortie,
**caractérisée en ce qu'**
une sortie, par l'ouverture (7) de sortie de condensat (5) collecté dans la cuve (6) collectrice de condensat, est appuyée au moyen d'un dispositif à air comprimé, qui est disposé de manière à agir sur le condensat (5) collecté en direction de l'environnement de la cuve (6) collectrice de condensat.

2. Installation de climatisation suivant la revendication 1,
**caractérisée en ce que**
le dispositif à air comprimé est formé d'une buse (9) à éjecteur.

3. Installation de climatisation suivant la revendication 2,
**caractérisée en ce qu'**
une sortie d'air comprimé de la buse (9) à éjecteur est commandée au moyen d'une électrovanne (10) dans un conduit (11) d'air comprimé pour la buse (9) à éjecteur.

4. Installation de climatisation suivant la revendication 3,
**caractérisée en ce que**
l'électrovanne (10) est actionnée d'une manière commandée dans le temps ou en raison d'un interrupteur (12) de niveau monté dans la cuve (6) collectrice de condensat.

5. Installation de climatisation suivant l'une des revendications 1 à 4,
**caractérisée en ce que**
l'ouverture (7) de sortie est prévue directement dans une partie de fond de la cuve (6) collectrice de condensat et est constituée, de manière à pouvoir par l'ouverture (7) de sortie maintenir une colonne d'eau pour rendre étanche à la pression l'installation de climatisation.

6. Installation de climatisation suivant l'une des revendications 1 à 4,
**caractérisée en ce que**
l'ouverture (7) de sortie est prévue au bout d'un conduit de déshydratation, qui est raccordé à la cuve (6) collectrice de condensat et dans lequel, pour l'étanchéité à la pression de l'installation de climatisation, peut être maintenue une colonne d'eau.

7. Installation de climatisation suivant l'une des revendications 1 à 6,
**caractérisée en ce que**
le ventilateur (4) d'afflux est rapporté à un sens d'écoulement du courant (3) d'air monté en aval de l'évaporateur (2).

8. Véhicule équipé d'une installation de climatisation suivant l'une des revendications 1 à 7.

9. Véhicule suivant la revendication 8,
dans lequel il est prévu un réservoir d'air comprimé, avec lequel le dispositif à air comprimé de l'installation de climatisation communique.

10. Véhicule suivant la revendication 9,
dans lequel le dispositif à air comprimé de l'installation de climatisation ne communique avec le réservoir à air comprimé que par un étranglement.
